# EUROPEAN PATENT APPLICATION

(11) **EP 3 451 723 A1**
(43) Date of publication of application: **06.03.2019**
(21) Application number: 16901981.7
(22) Date of filing: 18.05.2016
(51) Int. Cl.: H04W 12/06

(54) **COMMUNICATION METHOD, NETWORK EQUIPMENT, AND USER EQUIPMENT**

(71) Applicant: Huawei Technologies Co., Ltd., Longgang District Shenzhen, Guangdong 518129 (CN)
(72) Inventor: LI, Yan, Shenzhen, Guangdong 518129 (CN); ZHU, Fangyuan, Shenzhen, Guangdong 518129 (CN); YING, Jiangwei, Shenzhen, Guangdong 518129 (CN)
(74) Representative: Epping - Hermann - Fischer
(86) International application number: PCT/CN2016/082480
(87) International publication number: WO 2017/197596

(57) **Abstract**

The present invention provides a communication method, a network-side device, and user equipment. The communication method includes: receiving, by a network-side device, a certificate request message sent by user equipment, where the certificate request message carries information about a key shared between the user equipment and a wireless communications network to which the network-side device belongs or carries information about a first certificate generated for the user equipment by a CA; authenticating, by the network-side device, the user equipment based on the information about the key or the information about the first certificate; generating, by the network-side device, a second certificate for the user equipment when the network-side device authenticates the user equipment successfully, based on the information about the key or the information about the first certificate; and sending, by the network-side device, a certificate response message to the user equipment, where the certificate response message carries information about the second certificate. According to the communication method, the network-side device, and the user equipment in the present invention, an operation burden of the wireless communications network can be reduced.

## Description

### TECHNICAL FIELD

The present invention relates to the communications field, and in particular, to a communication method, a network-side device, and user equipment.

### BACKGROUND

In an existing evolved packet system (Evolved Packet System, EPS) network, after setting up a radio resource control (Radio Resource Control, RRC) connection to the network, user equipment (User Equipment, UE) sends encrypted uplink data to an evolved NodeB (Evolved Node Base, eNodeB). Then the eNodeB sends the uplink data to a mobility management entity (Mobility Management Entity, MME). After receiving the uplink data sent by the UE by using the eNodeB, the MME obtains a packet existing before encryption by decrypting the foregoing uplink data according to a locally stored encryption algorithm rule negotiated with the UE. Then, the MME sends the uplink data packet to a serving gateway (Serving Gateway, SGW) based on an address of the SGW and a tunnel endpoint identifier (Tunnel Endpoint Identifier, TEID) of the uplink data, and then the SGW sends the packet to a packet data network gateway (Packet Data Network Gateway, PGW).

If the UE indicates, in the uplink data, that the network needs to return downlink data, the PGW returns downlink data to the MME by using the SGW

After receiving the downlink data, the MME performs data encryption on the downlink data according to the locally stored encryption algorithm rule negotiated with the UE, and sends the encrypted downlink data to the eNodeB. The eNodeB then sends the encrypted downlink data to the UE by using an RRC message. The UE decrypts the received downlink data, to obtain the downlink data existing before encryption.

In the foregoing data communication method, the MME (a core network) needs to store a context of the UE, such as a mobility management (Mobility Management, MM) context and a session management (Session Management, SM) context.

Machine-to-machine (Machine-to-Machine, M2M) communication requirements increase along with the development of communications technologies. Future operator specific services are no longer limited to voice and data traffic, and are to include an M2M service.

In most cases, UE in the M2M service is fixed in location and a service communication frequency is low. For example, in scenarios such as smart environment monitoring, smart metering, and object tracking on a Cellular Internet of Things (Cellular Internet of Things, CIOT), a packet report interval of UE is very long, and a packet may even be unidirectional (in other words, only UE needs to report a packet but a core network does not need to deliver a packet). In this case, if the core network still needs to maintain a context of such UEs, a storage burden is imposed. In other words, the core network may not perform mobility management and session management on these UEs. To be specific, the core network may not store and maintain an MM context and an SM context of these UEs, to reduce an operation burden of the core network.

However, if the core network does not store and maintain the MM context and the SM context of these UEs, there is a problem of transmitting packets of these UEs.

### SUMMARY

The present invention provides a communication method, a network-side device, and user equipment, to reduce an operation burden of a wireless communications network while implementing communication between the user equipment and the network-side device.

According to a first aspect, the present invention provides a communication method, where the communication method includes: receiving, by a network-side device, a certificate request message sent by user equipment, where the certificate request message carries information about a key shared between the user equipment and a wireless communications network to which the network-side device belongs or carries information about a first certificate generated for the user equipment by a certificate authority (Certificate Authority, CA); authenticating, by the network-side device, the user equipment based on the information about the key or the information about the first certificate; generating, by the network-side device, a second certificate for the user equipment when the network-side device authenticates, based on the information about the key or the information about the first certificate, the user equipment successfully; and sending, by the network-side device, a certificate response message to the user equipment, where the certificate response message carries information about the second certificate.

In this embodiment of the present invention, the wireless communications network authenticates the user equipment based on the information about the shared key or the first certificate generated for the user equipment by the CA, and generates a certificate for authenticated user equipment. The user equipment can communicate with the wireless communications network by using the certificate. In other words, even if the wireless communications network does not store or maintain an MM context and an SM context of the user equipment, communication between the user equipment and the wireless communications network can be implemented based on the certificate. Therefore, according to the communication method in this embodiment of the present invention, storage and management burdens of the wireless communications network can be reduced, and stateless data transmission of the user equipment can also be implemented.

In a possible implementation, the authenticating, by the network-side device, the user equipment based on the information about the key or the information about the first certificate includes: obtaining, by the network-side device, subscription data of the user equipment from a home subscriber server; and authenticating, by the network-side device, the user equipment based on the subscription data and the information about the key or the information about the first certificate.

In this embodiment of the present invention, the wireless communications network not only authenticates the user equipment based on the information about the shared key or the second certificate generated for the user equipment by the CA, but also needs to authenticates the user equipment based on the subscription data of the user equipment, thereby improving communication security.

In a possible implementation, the generating, by the network-side device, the second certificate for the user equipment includes: sending, by the network-side device, a certificate application message to the certificate authority CA, where the certificate application message is used to request the CA to generate the second certificate for the user equipment; and receiving, by the network-side device, a certificate reply message sent by the CA, where the certificate reply message carries the information about the second certificate.

In this embodiment of the present invention, after receiving the certificate application message of the user equipment, the wireless communications network may act as an agent of the user equipment and apply to the CA in or outside a domain of the wireless communications network, to generate a certificate for the user equipment. Certainly, alternatively, a device in the wireless communications network may directly generate a certificate for the user equipment.

In a possible implementation, the communication method further includes: receiving, by the network-side device, an uplink packet sent by the user equipment, where the uplink packet includes the second certificate and a first packet that is encrypted by using a certificate of the wireless communications network; authenticating, by the network-side device, the user equipment based on the second certificate; and decrypting, by the network-side device, the first packet when the network-side device authenticates, based on the second certificate, the user equipment successfully.

In this embodiment of the present invention, the wireless communications network obtains, from the user equipment, the encrypted packet and the certificate generated for the user equipment by the wireless communications network, and decrypts the encrypted packet by using the certificate when the user equipment is authenticated successfully based on the certificate. This frees the wireless communications network from pre-storing content for secure communication between the wireless communications network and the user equipment, thereby reducing an operation burden of the wireless communications network.

In a possible implementation, the certificate response message further carries the certificate of the wireless communications network.

In a possible implementation, the communication method further includes: sending a downlink packet to the user equipment, where the downlink packet includes a second packet encrypted by using the second certificate.

In this embodiment of the present invention, the wireless communications network encrypts the downlink packet based on the certificate obtained from the user equipment. This further frees the wireless communications network from pre-storing the content for secure communication between the wireless communications network and the user equipment, thereby reducing an operation burden of the wireless communications network.

In a possible implementation, the network-side device includes a control-plane device in the wireless communications network.

In a possible implementation, the network-side device includes a forwarding-plane device or a base station in the wireless communications network; the communication method further includes: obtaining, by the forwarding-plane device or the base station, private key information of the wireless communications network from a control-plane device of the wireless communications network; and the decrypting, by the network-side device, the first packet includes: decrypting, by the network-side device, the first packet by using the private key information.

According to a second aspect, the present invention provides a communication method, including: sending, by user equipment, a certificate request message to a network-side device, where the certificate request message carries information about a key shared between the user equipment and a wireless communications network to which the network-side device belongs or carries information about a first certificate generated for the user equipment by a certificate authority CA; and receiving, by the user equipment, a certificate response message sent by the network-side device, where the certificate response message carries information about a second certificate generated for the user equipment by the network-side device, and the second certificate is a certificate generated for the user equipment when the network-side device authenticates, based on the information about the key or the information about the first certificate, the user equipment successfully.

In this embodiment of the present invention, the user equipment applies to the wireless communications network for a certificate. The certificate may be used to implement communication between the user equipment and the wireless communications network. In other words, the user equipment carries the certificate in a subsequent communication process with the wireless communications network, so that the network-side device in the wireless communications network can authenticate the user equipment and/or decrypt a packet based on the certificate. In this way, the network-side device in the wireless communications network may not need to store or maintain an MM context and an SM context of the UE, thereby implementing stateless data communication of the user equipment while reducing storage and management burdens of the network-side device.

In a possible implementation, the communication method further includes: sending, by the user equipment, an uplink packet to the network-side device, where the uplink packet includes the second certificate and a first packet that is encrypted by using a certificate of the wireless communications network, and the second certificate is used by the network-side device to authenticate the user equipment.

In this embodiment of the present invention, the user equipment encrypts the packet based on the certificate of the wireless communications network, thereby improving security of the packet. In addition, the user equipment sends the certificate generated for the user equipment by the wireless communications network when sending the encrypted packet, so that a wireless communications system can decrypt the packet only when , the user equipment is authenticated successfully based on the certificate of the user equipment. This also ensures communication security.

In a possible implementation, the certificate of the wireless communications network is preconfigured on the user equipment or the certificate of the wireless communications network is obtained by the user equipment from the certificate response message.

The certificate of the wireless communications network may have been preconfigured on the user equipment or the certificate of the wireless communications network may have been obtained from the certificate response message, and the wireless communications network may be authenticated by using the certificate.

In a possible implementation, the communication method further includes: receiving, by the user equipment, a downlink packet sent by the wireless communications network, where the downlink packet includes a second packet that is encrypted by the wireless communications network by using the second certificate; authenticating, by the user equipment, the wireless communications network based on the certificate of the wireless communications network; and decrypting, by the user equipment, the second packet when the user equipment authenticates, based on the certificate of the wireless communications network, the wireless communications networksuccessfully.

In this embodiment of the present invention, the packet received by the user equipment is a packet encrypted by the wireless communications network based on the certificate of the user equipment obtained from the user equipment. Therefore, the wireless communications network does not need to store or maintain content for secure communication with the user equipment for a long time, thereby reducing a burden of the wireless communications network. In addition, after receiving the packet, the user equipment authenticates the wireless communications network based on the certificate of the wireless communications network. In this way, the user equipment can decrypt only a packet sent by an authenticated wireless communications network. This also improves communication security.

In this embodiment of the present invention, the certificate of the wireless communications network may have been preconfigured on the user equipment or the certificate of the wireless communications network may have been obtained in a previous communication process between the wireless communications network and the user equipment, and the wireless communications network may be authenticated by using the certificate.

According to a third aspect, the present invention provides a network-side device, where the network-side device includes a module configured to perform the communication method according to the first aspect.

According to a fourth aspect, the present invention provides user equipment, where the user equipment includes a module configured to perform the communication method according to the second aspect.

According to a fifth aspect, the present invention provides a network-side device, where the network-side device includes a memory, a processor, and a transceiver. The memory is configured to store a program, the processor is configured to execute the program, and the transceiver is configured to communicate with another device. When the program is executed, the processor invokes the transceiver to perform the method according to the first aspect.

According to a sixth aspect, the present invention provides user equipment, where the user equipment includes a memory, a processor, and a transceiver. The memory is configured to store a program, the processor is configured to execute the program, and the transceiver is configured to communicate with another device. When the program is executed, the processor invokes the transceiver to perform the method according to the second aspect.

According to a seventh aspect, the present invention provides a wireless communications system, including the network-side device according to the third aspect and the user equipment according to the fourth aspect.

According to an eighth aspect, the present invention provides a computer-readable medium. The computer-readable medium stores program code executed by a network-side device, and the program code includes an instruction for executing the method according to the first aspect.

According to a ninth aspect, the present invention provides a computer-readable medium. The computer-readable medium stores program code executed by user equipment, and the program code includes an instruction for executing the method according to the second aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a wireless communications network according to an embodiment of the present invention;
FIG. 2 is a schematic architectural diagram of a wireless communications network according to an embodiment of the present invention;
FIG. 3 is a schematic flowchart of a communication method according to an embodiment of the present invention;
FIG. 4 is a schematic flowchart of a communication method according to an embodiment of the present invention;
FIG. 5 is a schematic flowchart of a communication method according to an embodiment of the present invention;
FIG. 6 is a schematic structural diagram of a network-side device according to an embodiment of the present invention;
FIG. 7 is a schematic structural diagram of user equipment according to an embodiment of the present invention;
FIG. 8 is a schematic structural diagram of a network-side device according to an embodiment of the present invention; and
FIG. 9 is a schematic structural diagram of user equipment according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

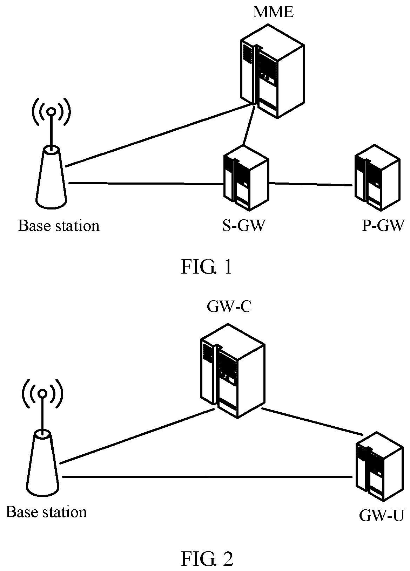

For ease of understanding, example diagrams of an entire wireless communications network that can implement a communication method according to the embodiments of the present invention are first described based on FIG. 1 and FIG. 2. It should be understood that the embodiments of the present invention are not limited to a system architecture shown in FIG. 1 or FIG. 2. In addition, an apparatus in FIG. 1 or FIG. 2 may be hardware, software divided by functionality, or a combination of hardware and software.

A wireless communications network shown in FIG. 1 includes a base station, a mobility management entity (Mobility Management Entity, MME), a serving gateway (Serving Gateway, SGW), and a packet data network gateway (Packet Data Network Gateway, PGW). The wireless communications network shown in FIG. 1 may be a conventional evolved packet core (Evolved Packet Core, EPC) network.

The base station in the embodiments of the present invention may be a base transceiver station (Base Transceiver Station, BTS) in a Global System for Mobile Communications (Global System for Mobile Communications, GSM) or a Code Division Multiple Access (Code Division Multiple Access, CDMA) system, may be a NodeB (NodeB) in a Wideband Code Division Multiple Access (Wideband Code Division Multiple Access, WCDMA) system, or may be an evolved NodeB (Evolved NodeB, eNB or eNodeB) in an LTE system, a base station device or a micro base station device in a future 5G network, or the like. The present invention sets no limitation thereto.

The MME is a control-plane device in the wireless communications network. The MME can determine an action to be performed on a user for an event based on mobility or a connection status of the user. Main functions include access control, mobility management, session management, network element selection, user bearer information storage, and the like. Mobility management supported by the MME includes: attach, detach, tracking area update, handover, user purge, and the like. The MME is responsible for user mobility management, and further includes user context and mobile status management, temporary user identity allocation, user authentication and authorization, and the like.

The SGW is a forwarding-plane device in the wireless communications network and forwards a packet of UE by using a transmission tunnel between the base station and the PGW The SGW is responsible for bearer setup, modification, and release and quality of service (Quality of Service, QoS) control; and supports main bearer QoS parameters, including a QoS class identifier (QoS Class Identifier, QCI), an Address Resolution Protocol (Address Resolution Protocol, ARP), and a guaranteed bit rate (Guaranteed Bit Rate, GBR). The SGW is further responsible for information storage and stores bearer context information of an evolved packet system (Evolved Packet System, EPS), including a tunnel identifier, a user identifier, and the like.

The PGW is also a forwarding-plane device. An interface between the PGW and an external packet data network (Packet Data Network, PDN) may be integrated with the SGW The PGW is responsible for Internet Protocol (Internet Protocol, IP) address assignment, bearer setup, modification, and release, policy and charging rules function (Policy and Charging Rules Function, PCRF) unit selection, QoS control, a policy and charging enforcement function, and storage of the bearer context information of the EPS, including the tunnel identifier, the user identifier, and the like.

A wireless communications network shown in FIG. 2 includes a base station, a control-plane gateway (Gateway-Control, GW-C) and a user-plane gateway (Gateway-User, GW-U). The wireless communications network shown in FIG. 2 may also be referred to as a communications network in which control and forwarding are separated.

The control-plane gateway integrates functions of an MME, a gateway control plane, and the like. In addition to being responsible for user mobility management, the control-plane gateway also provides functions such as IP address assignment, gateway user-plane device selection, bearer management, and gateway user-plane forwarding rule generation. The control-plane gateway may also be referred to as a control-plane device.

The user-plane gateway provides functions such as user packet forwarding and encapsulation, and statistic collection. The user-plane gateway may also be referred to as a forwarding-plane device or a user-plane device.

The wireless communications network shown in FIG. 1 or FIG. 2 may be a CloT. Applications such as smart environment monitoring, smart metering, object tracking, smart city, smart farm, or smart home can be implemented in the CloT.

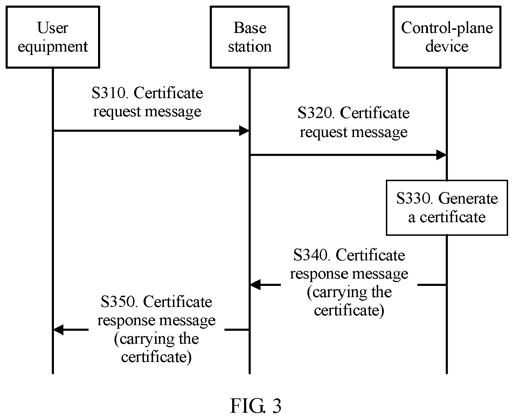

FIG. 3 is a schematic flowchart of a communication method according to an embodiment of the present invention. It should be understood that FIG. 3 shows steps or operations of the communication method, but these steps or operations are merely examples. In this embodiment of the present invention, other operations or variations of the operations in FIG. 3 may further be performed. In addition, the steps in FIG. 3 may be performed in a sequence different from the sequence presented in FIG. 3, and not all the operations in FIG. 3 need to be performed.

S310. User equipment sends a certificate request message to a base station in a wireless communications network, and the base station in the wireless communications network receives the certificate request message sent by the user equipment, where the certificate request message is used to request the wireless communications network to generate a certificate for the user equipment.

S320. The base station sends, to a control-plane device in the wireless communications network, the certificate request message received from the user equipment, and the control-plane device receives the certificate request message of the user equipment sent by the base station.

S330. The control-plane device generates a second certificate for the user equipment according to the certificate request message.

S340. The control-plane device sends a certificate response message to the base station, and the base station receives the certificate response message sent by the control-plane device, where the certificate response message carries information about the second certificate, the second certificate is used in secure communication between the wireless communications network and the user equipment, and the certificate response message sent to the base station by the control-plane device may further carry a certificate of the wireless communications network.

S350. The base station sends the certificate response message to the user equipment, and the user equipment receives the certificate response message sent by the base station.

In this embodiment of the present invention, the control-plane device in the wireless communications network generates a certificate for the user equipment according to a request of the user equipment, so that the user equipment can communicate with the wireless communications network by using the certificate. In this way, the wireless communications network does not need to pre-store content such as an MM context and an SM context of the user equipment to implement communication between the user equipment and the wireless communications network, thereby implementing communication between the user equipment and the wireless communications network while reducing storage and management burdens of the wireless communications network.

In S310, the certificate request message may carry information about a key shared between the user equipment and the wireless communications network and information about a first certificate generated for the user equipment by a CA. In this case, correspondingly, that the control-plane device generates the second certificate for the user equipment according to the certificate request message is specifically: The control-plane device authenticates the user equipment based on the information about the key or the information about the first certificate, and generates the second certificate for the user equipment when the control-plane device authenticates, based on the information about the key or the information about the first certificate, the user equipment successfully.

The wireless communications network authenticates the user equipment based on the information about the shared key or the first certificate generated for the user equipment by the CA. This may further ensure that the wireless communications network generates a certificate for authenticated user equipment only, thereby improving communication security.

A specific implementation in which the control-plane device authenticates the user equipment based on the information about the key or the information about the first certificate is as follows: The control-plane device obtains subscription data of the user equipment from a home subscriber server (Home Subscriber Server, HSS), and then the control-plane device authenticates the user equipment based on the subscription data and the information about the key or the information about the first certificate.

In addition to authenticating the user equipment based on the information about the shared key or the first certificate generated for the user equipment by the CA, the wireless communications network needs to authenticate the user equipment based on the subscription data of the user equipment, thereby further improving communication security.

The certificate request message in S310 and S320 may be an attach request message, and the certificate response message in S340 and S350 may be an attach accept message.

In this case, the user equipment first generates a key pair that includes a public key and a private key. The certificate request message may carry information about an identifier of the user equipment and public key information of the user equipment. The identifier of the user equipment may be an international mobile subscriber identity (International Mobile Subscriber Identification Number, IMSI) or a mobile subscriber international integrated services digital network number (Mobile Subscriber International Integrated Services Digital Network Number, MSISDN).

In S330, the control-plane device may obtain the subscription data of the user equipment from the HSS based on the identification information of the user equipment and authenticate the user equipment. After authenticating the user equipment successfully, the control-plane device generates a certificate for the user equipment, where the certificate may include the identification information and the public key of the user equipment, and signature information that is generated for the identification information and the public key of the user equipment by the control-plane device by using a private key of the wireless communications network.

Correspondingly, the second certificate of the user equipment carried in the certificate response message in S340 and S350 includes the identification information of the user equipment, the public key information of the user equipment, and the signature information of the wireless communications network.

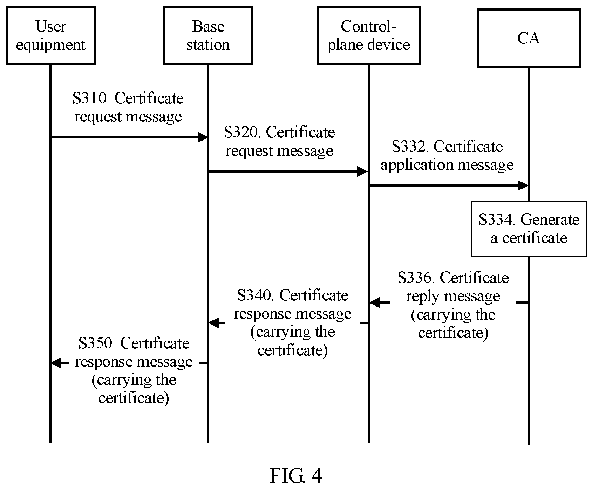

FIG. 4 is a schematic flowchart of a communication method according to another embodiment of the present invention. It should be understood that FIG. 4 shows steps or operations of the communication method, but these steps or operations are merely examples. In this embodiment of the present invention, other operations or variations of the operations in FIG. 4 may further be performed. In addition, the steps in FIG. 4 may be performed in a sequence different from the sequence presented in FIG. 3, and not all the operations in FIG. 4 need to be performed.

Same reference numerals in FIG. 4 and FIG. 3 have same meanings. For brevity, details are not described herein again. Differences between the communication method shown in FIG. 4 and the communication method shown in FIG. 3 are as follows.

After the control-plane device receives, in S320, the certificate request message sent by the base station, in S332, the control-plane device acts as an agent of the user equipment and sends a certificate application message to the CA, and the CA receives the certificate application message sent by the control-plane device.

S334. A CA generates a second certificate for the user equipment.

S336. The CA sends a certificate reply message to the control-plane device, where the certificate reply message carries the second certificate generated for the user equipment by the CA; and the control-plane device receives the certificate reply message sent by the CA.

After obtaining the second certificate of the user equipment from the CA, the control-plane device sends the certificate response message to the base station in S340, where the certificate response message carries the second certificate of the user equipment.

In this embodiment of the present invention, after receiving the certificate application message of the user equipment, the control-plane device may act as an agent of the user equipment and apply to the CA in or outside the wireless communications network, to generate a certificate for the user equipment, to fully use a function of the CA.

Specifically, when the certificate request message received from the base station by the control-plane device in S320 carries information about a key shared between the user equipment and the wireless communications network or carries information about the second certificate generated for the user equipment by the CA, the communication method shown in FIG. 4 may further include: authenticating, by the control-plane device, the user equipment based on the information about the shared key or the information about the second certificate carried in the certificate request message.

The control-plane device acts as an agent of the user equipment and sends the certificate application message to the CA in S332 only when authenticating, based on the information about the key or the information about the second certificate, the user equipment successfully.

If the certificate request message carries information about an identifier of the user equipment and public key information of the user equipment, the identifier of the user equipment may be an IMSI or an MSISDN, and a specific implementation in which the control-plane device authenticates the user equipment may be as follows: The control-plane device obtains subscription data of the user equipment from an HSS based on the identification information of the user equipment and authenticates the user equipment.

The control-plane device acts as an agent of the user equipment and sends the certificate application message to the CA only when authenticating the user equipment successfully. In this case, the certificate application message may carry the identification information of the user equipment and the public key information of the user equipment.

Correspondingly, in S334, the CA generates the second certificate for the user equipment based on a public key and the identifier of the user equipment, where the second certificate may include the identification information and the public key information of the user equipment, and signature information that is generated based on the identification information of the user equipment and the public key of the user equipment by using a private key of the CA.

Correspondingly, the second certificate of the user equipment carried in the certificate response message in S340 and S350 includes the identification information of the user equipment, the public key information of the user equipment, and the signature information of the CA.

The CA in FIG. 4 may be a CA in a domain of the wireless communications network or may be a CA outside the domain of the wireless communications network. The present invention sets no limitation thereto.

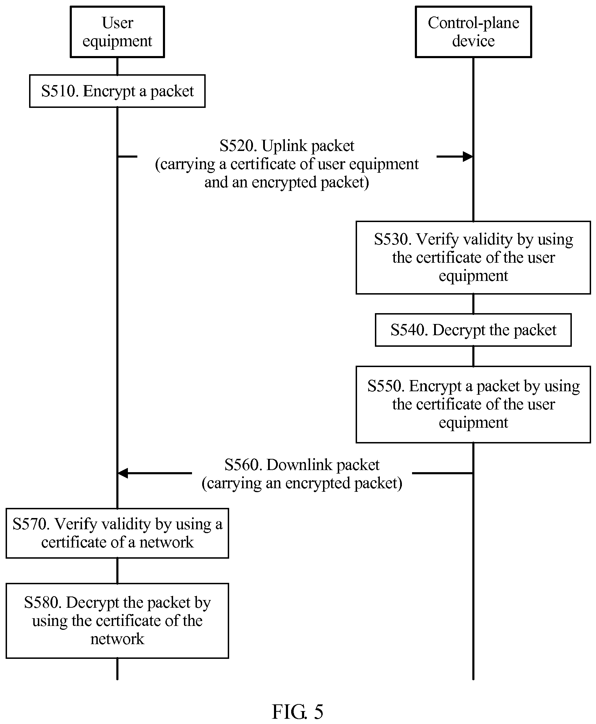

The communication methods described in FIG. 3 and FIG. 4 mainly describe a communication process in which the network-side device generates a certificate for the user equipment according to a request of the user equipment and sends the certificate to the user equipment. The following describes, with reference to FIG. 5, a method in which user equipment performs, after obtaining a certificate generated for the user equipment by a wireless communications network, secure communication with the wireless communications network by using the certificate.

FIG. 5 is a schematic flowchart of a communication method according to an embodiment of the present invention. It should be understood that FIG. 5 shows steps or operations of the communication method, but these steps or operations are merely examples. In this embodiment of the present invention, other operations or variations of the operations in FIG. 5 may further be performed. In addition, the steps in FIG. 5 may be performed in a sequence different from the sequence presented in FIG. 5, and not all the operations in FIG. 5 need to be performed.

S510. User equipment encrypts a packet by using a certificate of a wireless communications network.

S520. The user equipment sends an uplink packet to a control-plane device, where the uplink packet includes a second certificate of the user equipment and a first packet that is encrypted by using the certificate of the wireless communications network; and the control-plane device receives the uplink packet sent by the user equipment.

Herein, the user equipment may send the uplink packet to the control-plane device by using a base station. In other words, the uplink packet received by the control-plane device is sent by the user equipment by using the base station.

S530. The control-plane device authenticates the user equipment based on the second certificate of the user equipment.

S540. When the control-plane device authenticates, based on the second certificate of the user equipment, the user equipment successfully, the control-plane device decrypts the first packet, and the control-plane device may send a packet obtained by decrypting the first packet to a server.

S550. When there is a packet that needs to be sent to the user equipment in the wireless communications network, the control-plane device encrypts the packet by using the second certificate of the user equipment to obtain a second packet, where the encrypted packet may be obtained from the server by a control-plane network element.

S560. The control-plane device sends a downlink packet to the user equipment, where the downlink packet carries the second packet; and the user equipment receives the downlink packet sent by the control-plane device. Herein, the control-plane device may send the downlink packet to the user equipment by using the base station.

S570. The user equipment authenticates the wireless communications network based on the certificate of the wireless communications network.

S580. The user equipment decrypts the second packet when the user equipment authenticates, based on the certificate of the wireless communications network, the wireless communications network successfully.

In this embodiment of the present invention, the control-plane device obtains the encrypted packet and the certificate of the user equipment from the user equipment; and then decrypts the encrypted packet by using the certificate when authenticating, based on the certificate, the user equipment successfully. In addition, the control-plane device may encrypt, by using the certificate of the user equipment, the packet that needs to be sent to the user equipment. In this way, the wireless communications network may not need to pre-store content such as an MM context or an SM context of the user equipment, and communication between the user equipment and the wireless communications network can be implemented based on the certificate of the user equipment. This also reduces an operation burden of the wireless communications network.

In an existing attach procedure of the wireless communications network, the UE is authenticated based on an international mobile subscriber identity (International Mobile Subscriber Identification Number, IMSI) of the UE, namely, a key shared between the UE and the network. After the authentication succeeds, a session between the wireless communications network and the UE is then created. In this procedure, the wireless communications network stores a context of the UE, including a security context, a mobility management context, and a session management context.

In an existing communication method of the wireless communications network, the UE has two states: an active (active) state and an idle (idle) state. The wireless communications network needs to maintain the context of the UE regardless of a state of the UE.

However, by using the communication method in this embodiment of the present invention, the wireless communications network does not need to perform session management and mobility management on the UE. In other words, the wireless communications network does not need to know a state of the UE or store any state context of the UE, and the wireless communications network only needs to receive a packet sent by the UE or send a packet to the UE. Therefore, data transmission in the communication method in this embodiment of the present invention may also be referred to as stateless transmission.

The certificate of the wireless communications network includes a public key of the wireless communications network. In this case, in S510, the user equipment may specifically encrypt the packet by using the public key of the wireless communications network, to obtain the first packet.

The second certificate of the user equipment includes a public key of the user equipment and signature information. According to the descriptions of the communication methods in FIG. 3 and FIG. 4, the second certificate of the user equipment may be generated by the control-plane device or may be generated by a CA. If the second certificate is generated by the control-plane device, a signature in the second certificate may be a signature obtained by the control-plane device through encryption by using a private key of the wireless communications network. If the second certificate is generated by the CA, the signature in the second certificate may be a signature obtained by the CA through encryption by using a private key of the CA.

Correspondingly, in S530, a specific implementation method in which the control-plane device authenticates the user equipment based on the second certificate of the user equipment is as follows: If the second certificate is generated by the control-plane device, the control-plane device authenticates the signature information in the second certificate, that is, authenticates the user equipment, by using the public key of the wireless communications network. If the second certificate is generated by the CA, the control-plane device authenticates the signature information in the second certificate, that is, authenticates the user equipment, by using a public key of the CA.

Correspondingly, in S540, after the control-plane device authenticates, based on the second certificate of the user equipment, the user equipment successfully, the control-plane device decrypts the first packet by using the private key of the wireless communications network.

Correspondingly, in S550, when there is a packet that needs to be sent to the user equipment in the wireless communications network, the control-plane device encrypts the packet by using a public key in the second certificate to obtain the second packet.

Correspondingly, in S570, the user equipment authenticates the wireless communications network by using the public key in the certificate of the wireless communications network.

Correspondingly, in S580, the user equipment decrypts the second packet by using a private key of the user equipment when the user equipment authenticates, based on the certificate of the wireless communications network, the wireless communications network successfully.

The communication method shown in FIG. 5 is performed by the control-plane device. In other words, the control-plane device authenticates the user equipment and decrypts or encrypts a packet. However, in the wireless communications network, the communication method shown in FIG. 5 may further be implemented by another device, for example, a base station or a forwarding-plane device.

When the base station or the forwarding-plane device decrypts a packet, the base station or the forwarding-plane device may obtain the private key of the wireless communications network from the control-plane device.

Optionally, the wireless communications network in the communication methods shown in FIG. 3 to FIG. 5 may be a home network of the user equipment or may be a visited network of the user equipment.

If the user equipment moves and roams from the home network to the visited network, the user equipment may resend a certificate request message to the visited network, to implement the communication method in FIG. 3 or FIG. 4, so that the user equipment can obtain, from the visited network, a certificate generated for the user equipment by the visited network.

After obtaining, from the visited network, the certificate generated for the user equipment by the visited network, the user equipment may implement the communication method shown in FIG. 5 together with the visited network. After decrypting a packet sent by the user equipment, a network-side device in the visited network forwards a packet obtained through decryption to the home network of the user equipment. The network-side device in the visited network obtains, from the home network of the user equipment, a packet that needs to be sent to the user equipment; encrypts the packet based on the certificate of the user equipment; and then sends the encrypted packet to the user equipment.

In this way, after the user equipment roams, the visited network does not need to maintain or store a context related to the user equipment. The user equipment only needs to obtain, from the visited network, the certificate generated for the user equipment by the visited network, to implement secure communication with the visited network based on the certificate.

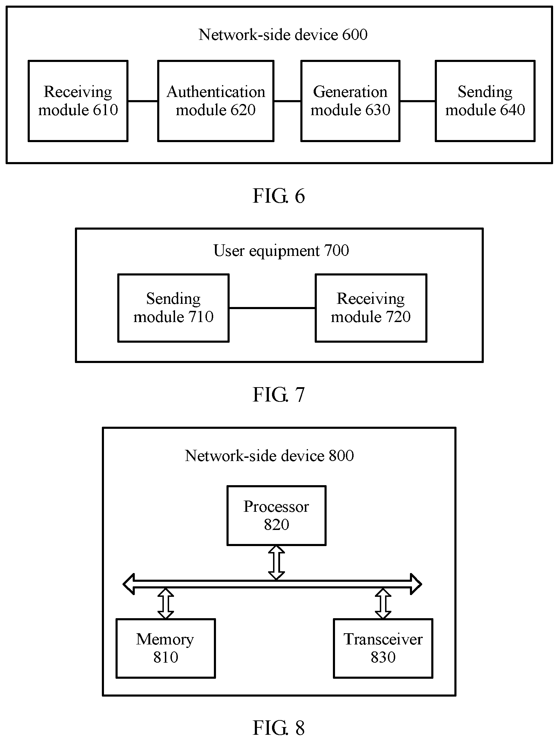

The following describes, with reference to FIG. 6 to FIG. 9, a network-side device and user equipment for implementing the communication method according to the embodiments of the present invention.

FIG. 6 is a schematic structural diagram of a network-side device according to an embodiment of the present invention. It should be understood that the network-side device 600 shown in FIG. 6 is merely for illustration purposes, and the network-side device 600 may further include more or fewer components. The network-side device in FIG. 6 can implement steps performed by the control-plane device in FIG. 3, FIG. 4, and FIG. 5. The network-side device 600 shown in FIG. 6 includes a receiving module 610, an authentication module 620, a generation module 630, and a sending module 640.

The receiving module 610 is configured to receive a certificate request message sent by user equipment, where the certificate request message carries information about a key shared between the user equipment and a wireless communications network to which the network-side device belongs or carries information about a first certificate generated for the user equipment by a certificate authority CA.

The authentication module 620 is configured to authenticate the user equipment based on the information about the key or the information about the first certificate.

The generation module 630 is configured to generate a second certificate for the user equipment when the authentication module authenticates, based on the information about the key or the information about the first certificate, the user equipment successfully.

The sending module 640 is configured to send a certificate response message to the user equipment, where the certificate response message carries information about the second certificate.

In this embodiment of the present invention, the network-side device in the wireless communications network authenticates the user equipment based on the information about the shared key or the second certificate generated for the user equipment by the CA, and generates a certificate for authenticated user equipment. The user equipment can communicate with the wireless communications network based on the certificate. Therefore, the wireless communications network does not need to store an MM context and an SM context of the user equipment. According to the communication method in this embodiment of the present invention, storage and management burdens of the wireless communications network can be reduced, and stateless data transmission of the user equipment can also be implemented.

Optionally, in an embodiment, the authentication module is specifically configured to: obtain subscription data of the user equipment from a home subscriber server, and authenticate the user equipment based on the subscription data and the information about the key or the information about the first certificate.

In this embodiment of the present invention, the network-side device not only authenticates the user equipment based on the information about the shared key or the second certificate generated for the user equipment by the CA, but also needs to authenticate the user equipment based on the subscription data of the user equipment, thereby improving communication security.

Optionally, in an embodiment, the generation module is specifically configured to: send a certificate application message to the certificate authority CA, where the certificate application message is used to request the CA to generate the second certificate for the user equipment; and receive a certificate reply message sent by the CA, where the certificate reply message carries the information about the second certificate.

In this embodiment of the present invention, after receiving the certificate application message of the user equipment, the network-side device may act as an agent of the user equipment and apply to the CA in or outside a domain of the wireless communications network, to generate a certificate for the user equipment. Certainly, alternatively, the network-side device may directly generate a certificate for the user equipment.

Optionally, in an embodiment, the receiving module is further configured to receive an uplink packet sent by the user equipment, where the uplink packet includes the second certificate and a first packet that is encrypted by using a certificate of the wireless communications network. The network-side device further includes the authentication module and a decryption module. The authentication module is configured to authenticate the user equipment based on the second certificate.

The decryption module is configured to decrypt the first packet when the authentication module authenticates, based on the second certificate, the user equipment successfully.

In this embodiment of the present invention, the network-side device obtains, from the user equipment, the encrypted packet and the certificate generated for the user equipment by the wireless communications network, and decrypts the encrypted packet by using the certificate when authenticating, based on the certificate, the user equipment successfully. This frees the wireless communications network from pre-storing content for secure communication between the wireless communications network and the user equipment, thereby reducing an operation burden of the wireless communications network.

Optionally, in an embodiment, the certificate response message further carries the certificate of the wireless communications network.

Optionally, in an embodiment, the sending module is further configured to send a downlink packet to the user equipment, where the downlink packet includes a second packet encrypted by using the second certificate.

In this embodiment of the present invention, the network-side device encrypts the downlink packet based on the certificate obtained from the user equipment. This further frees the wireless communications network from pre-storing the content for secure communication between the wireless communications network and the user equipment, thereby reducing an operation burden of the wireless communications network.

Optionally, in an embodiment, the network-side device is a control-plane device in the wireless communications network.

Optionally, in an embodiment, the network-side device is a forwarding-plane device or a base station in the wireless communications network. The network-side device further includes an obtaining module, configured to obtain private key information of the wireless communications network from a control-plane device of the wireless communications network. The decryption module is specifically configured to decrypt the first packet by using the private key information.

FIG. 7 is a schematic structural diagram of user equipment according to an embodiment of the present invention. It should be understood that the user equipment 700 shown in FIG. 7 is merely for illustration purposes, and the user equipment 700 may further include more or fewer components. The user equipment in FIG. 7 can implement steps performed by the user equipment in FIG. 3, FIG. 4, and FIG. 5. The user equipment 700 shown in FIG. 7 includes a sending module 710 and a receiving module 720.

The sending module 710 is configured to send a certificate request message to a network-side device, where the certificate request message carries information about a key shared between the user equipment and a wireless communications network to which the network-side device belongs or carries information about a first certificate generated for the user equipment by a certificate authority CA.

The receiving module 720 is configured to receive a certificate response message sent by the network-side device, where the certificate response message carries information about a second certificate generated for the user equipment by the network-side device, and the second certificate is a certificate generated for the user equipment when the network-side device authenticates, based on the information about the key or the information about the first certificate, the user equipment successfully.

In this embodiment of the present invention, the user equipment sends the information about the shared key or the second certificate generated for the user equipment by the CA to the wireless communications network. In this way, the wireless communications network can authenticate the user equipment based on the key or the foregoing first certificate. This ensures that the wireless communications network generates a certificate for authenticated user equipment. Then, the user equipment carries the certificate in a subsequent communication process with the wireless communications network, so that the network-side device in the wireless communications network can authenticate the user equipment and/or decrypt a packet based on the certificate. In this way, the network-side device in the wireless communications network may not need to store or maintain a context, for authentication, of the UE, thereby implementing stateless data communication while reducing storage and management burdens of the network-side device.

Optionally, in an embodiment, the sending module is further configured to send an uplink packet to the network-side device, where the uplink packet includes the second certificate and a first packet that is encrypted by using a certificate of the wireless communications network, and the second certificate is used by the network-side device to authenticate the user equipment.

In this embodiment of the present invention, the user equipment encrypts the packet based on the certificate of the wireless communications network, thereby improving security of the packet. In addition, the user equipment sends the certificate generated for the user equipment by the wireless communications network when sending the encrypted packet, so that a wireless communications system can decrypt the packet only when the user equipment is authenticated successfully based on the certificate of the user equipment. This also ensures communication security.

Optionally, in an embodiment, the receiving module is further configured to receive a downlink packet sent by the network-side device, where the downlink packet includes a second packet that is encrypted by the network-side device by using the second certificate. The user equipment further includes an authentication module and a decryption module. The authentication module is configured to authenticate the wireless communications network based on the certificate of the wireless communications network, and the decryption module is configured to decrypt the second packet when the authentication module authenticates, based on the certificate of the wireless communications network, the wireless communications network successfully.

In this embodiment of the present invention, the packet received by the user equipment is a packet encrypted by the wireless communications network based on the certificate of the user equipment obtained from the user equipment. Therefore, the wireless communications network does not need to store or maintain content for secure communication with the user equipment for a long time, thereby reducing a burden of the wireless communications network. In addition, after receiving the packet, the user equipment authenticates the wireless communications network based on the certificate of the wireless communications network. In this way, the user equipment can decrypt only a packet sent by an authenticated wireless communications network. This also improves communication security.

Optionally, in an embodiment, the certificate of the wireless communications network is preconfigured on the user equipment or the certificate of the wireless communications network is obtained by the user equipment from the certificate response message.

FIG. 8 is a schematic structural diagram of a network-side device according to an embodiment of the present invention. The network-side device in FIG. 8 can implement steps performed by the control-plane device in FIG. 3 to FIG. 5. The network-side device 800 shown in FIG. 8 includes a memory 810, a processor 820, and a transceiver 830.

The memory 810 is configured to store a program.

The processor 820 is configured to execute the program in the memory 810.

The transceiver 830 is configured to receive, when scheduled by the processor, a certificate request message sent by user equipment, where the certificate request message carries information about a key shared between the user equipment and a wireless communications network to which the network-side device belongs or carries information about a first certificate generated for the user equipment by a certificate authority CA.

The processor 820 is specifically configured to: authenticate the user equipment based on the information about the key or the information about the first certificate, and generate a second certificate for the user equipment when authenticating, based on the information about the key or the information about the first certificate, the user equipment successfully.

The transceiver 830 is further configured to send a certificate response message to the user equipment, where the certificate response message carries information about the second certificate.

In this embodiment of the present invention, the wireless communications network authenticates the user equipment based on the information about the shared key or the first certificate generated for the user equipment by the CA, and generates a certificate for authenticated user equipment. The user equipment can communicate with the wireless communications network by using the certificate. In other words, even if the wireless communications network does not store or maintain an MM context and an SM context of the user equipment, communication between the user equipment and the wireless communications network can be implemented based on the certificate. Therefore, according to the communication method in this embodiment of the present invention, storage and management burdens of the wireless communications network can be reduced, and stateless data transmission of the user equipment can also be implemented.

Optionally, in an embodiment, the processor 820 is specifically configured to: obtain subscription data of the user equipment from a home subscriber server, and authenticate the user equipment based on the subscription data and the information about the key or the information about the first certificate.

In this embodiment of the present invention, the network-side device not only authenticates the user equipment based on the information about the shared key or the second certificate generated for the user equipment by the CA, but also needs to authenticate the user equipment based on the subscription data of the user equipment, to further improve communication security.

Optionally, in an embodiment, the processor 820 is specifically configured to: send a certificate application message to the certificate authority CA, where the certificate application message is used to request the CA to generate the second certificate for the user equipment; and receive a certificate reply message sent by the CA, where the certificate reply message carries the information about the second certificate.

In this embodiment of the present invention, after receiving the certificate application message of the user equipment, the network-side device may act as an agent of the user equipment and apply to the CA in or outside a domain of the wireless communications network, to generate a certificate for the user equipment. Certainly, alternatively, the network-side device may directly generate a certificate for the user equipment.

Optionally, in an embodiment, the transceiver 830 is further configured to receive an uplink packet sent by the user equipment, where the uplink packet includes the second certificate and a first packet that is encrypted by using a certificate of the wireless communications network. The processor 820 is further configured to: authenticate the user equipment based on the second certificate; and decrypt the first packet when authenticating, based on the second certificate, the user equipment successfully.

In this embodiment of the present invention, the network-side device obtains, from the user equipment, the encrypted packet and the certificate generated for the user equipment by the wireless communications network, and decrypts the encrypted packet by using the certificate when authenticating, based on the certificate, the user equipment successfully. This frees the wireless communications network from pre-storing content for secure communication between the wireless communications network and the user equipment, thereby reducing an operation burden of the wireless communications network.

Optionally, in an embodiment, the certificate response message further carries the certificate of the wireless communications network.

Optionally, in an embodiment, the transceiver 830 is further configured to send a downlink packet to the user equipment, where the downlink packet includes a second packet encrypted by using the second certificate.

In this embodiment of the present invention, the network-side device encrypts the downlink packet based on the certificate obtained from the user equipment. This further frees the wireless communications network from pre-storing the content for secure communication between the wireless communications network and the user equipment, thereby reducing an operation burden of the wireless communications network.

Optionally, in an embodiment, the network-side device is a control-plane device in the wireless communications network.

Optionally, in an embodiment, the network-side device is a forwarding-plane device or a base station in the wireless communications network. The processor 820 is further configured to: obtain private key information of the wireless communications network from a control-plane device of the wireless communications network, and decrypt the first packet by using the private key information.

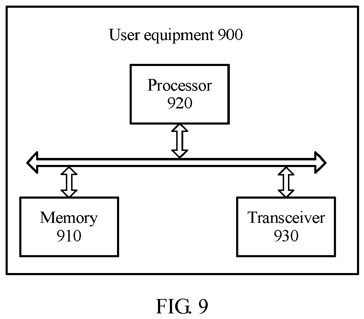

FIG. 9 is a schematic structural diagram of user equipment according to an embodiment of the present invention. The user equipment in FIG. 9 can implement steps performed by the user equipment in FIG. 3 to FIG. 5. User equipment 900 shown in FIG. 9 includes a memory 910, a processor 920, and a transceiver 930.

The memory 910 is configured to store a program.

The processor 920 is configured to execute the program in the memory 910.

The transceiver 930 is configured to send a certificate request message to a network-side device when scheduled by the processor 920, where the certificate request message carries information about a key shared between the user equipment and a wireless communications network to which the network-side device belongs or carries information about a first certificate generated for the user equipment by a certificate authority CA.

The transceiver 930 is further configured to receive a certificate response message sent by the network-side device, where the certificate response message carries information about a first certificate generated for the user equipment by the network-side device, and the first certificate is used for secure communication between the user equipment and the wireless communications network.

In this embodiment of the present invention, the user equipment applies to the wireless communications network for a certificate. The certificate may be used to implement communication between the user equipment and the wireless communications network. In other words, the user equipment carries the certificate in a subsequent communication process with the wireless communications network, so that the network-side device in the wireless communications network can authenticate the user equipment and/or decrypt a packet based on the certificate. In this way, the network-side device in the wireless communications network may not need to store or maintain an MM context and an SM context of the UE, thereby implementing stateless data communication of the user equipment while reducing storage and management burdens of the network-side device.

Optionally, in an embodiment, the certificate request message carries the information about the key shared between the user equipment and the wireless communications network or the information about the second certificate generated for the user equipment by the certificate authority CA, where the information about the key or the information about the second certificate is used by the network-side device to authenticate the user equipment. The first certificate is a certificate generated for the user equipment when the network-side device authenticates, based on the information about the key or the information about the second certificate, the user equipment successfully.

In this embodiment of the present invention, the user equipment sends the information about the shared key or the second certificate generated for the user equipment by the CA to the wireless communications network. In this way, the wireless communications network can authenticate the user equipment based on the key or the foregoing second certificate. This further ensures that the wireless communications network generates a certificate only for authenticated user equipment, and finally improves communication security.

Optionally, in an embodiment, the transceiver 930 is further configured to send an uplink packet to the network-side device, where the uplink packet includes the first certificate and a first packet that is encrypted by using a certificate of the wireless communications network, and the first certificate is used by the network-side device to authenticate the user equipment.

In this embodiment of the present invention, the user equipment encrypts the packet based on the certificate of the wireless communications network, thereby improving security of the packet. In addition, the user equipment sends the certificate generated for the user equipment by the wireless communications network when sending the encrypted packet, so that a wireless communications system can decrypt the packet only when the user equipment is authenticated successfully based on the certificate of the user equipment. This also ensures communication security.

Optionally, in an embodiment, the transceiver 930 is further configured to receive a downlink packet sent by the network-side device, where the downlink packet includes a second packet that is encrypted by the network-side device by using the first certificate. The processor 920 is further configured to authenticate the wireless communications network based on the certificate of the wireless communications network; and the processor 920 is further configured to decrypt the second packet when authenticating, based on the certificate of the wireless communications network, the wireless communications network successfully.

In this embodiment of the present invention, the packet received by the user equipment is a packet encrypted by the wireless communications network based on the certificate of the user equipment obtained from the user equipment. Therefore, the wireless communications network does not need to store or maintain content for secure communication with the user equipment for a long time, thereby reducing a burden of the wireless communications network. In addition, after receiving the packet, the user equipment authenticates the wireless communications network based on the certificate of the wireless communications network. In this way, the user equipment can decrypt only a packet sent by an authenticated wireless communications network. This also improves communication security.

Optionally, in an embodiment, the certificate of the wireless communications network is preconfigured on the user equipment or the certificate of the wireless communications network is obtained by the user equipment from the certificate response message.

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, comprising:
sending, by a user equipment, a certificate request message to a network-side device, wherein the certificate request message carries information about a key shared between the user equipment and a wireless communications network to which the network-side device belongs or carries information about a first certificate generated for the user equipment by a certificate authority CA; and
receiving, by the user equipment, a certificate response message sent by the network-side device, wherein the certificate response message carries information about a second certificate generated for the user equipment by the network-side device, and the second certificate is a certificate generated for the user equipment when the network-side device authenticates the user equipment successfully, based on the information about the key or the information about the first certificate.

2. The communication method according to claim 1, wherein the communication method further comprises:
sending, by the user equipment, an uplink packet to the network-side device, wherein the uplink packet comprises the second certificate and a first packet that is encrypted by using a certificate of the wireless communications network, and the second certificate is used by the network-side device to authenticate the user equipment.

3. The communication method according to claim 2, wherein the communication method further comprises:
receiving, by the user equipment, a downlink packet sent by the network-side device, wherein the downlink packet comprises a second packet that is encrypted by the network-side device by using the second certificate;
authenticating, by the user equipment, the wireless communications network based on the certificate of the wireless communications network; and
decrypting, by the user equipment, the second packet when the user equipment authenticates the wireless communications network successfully, based on the certificate of the wireless communications network.

4. The communication method according to claim 2 or 3, wherein the certificate of the wireless communications network is preconfigured on the user equipment or the certificate of the wireless communications network is obtained by the user equipment from the certificate response message.

5. A communication method, wherein the communication method comprises:
receiving, by a network-side device, a certificate request message sent by user equipment, wherein the certificate request message carries information about a key shared between the user equipment and a wireless communications network to which the network-side device belongs or carries information about a first certificate generated for the user equipment by a certificate authority CA;
authenticating, by the network-side device, the user equipment based on the information about the key or the information about the first certificate;
generating, by the network-side device, a second certificate for the user equipment when the network-side device authenticate the user equipment successfully based on the information about the key or the information about the first certificate; and
sending, by the network-side device, a certificate response message to the user equipment, wherein the certificate response message carries information about the second certificate.

6. The communication method according to claim 5, wherein the authenticating, by the network-side device, the user equipment based on the information about the key or the information about the first certificate comprises:
obtaining, by the network-side device, subscription data of the user equipment from a home subscriber server; and
authenticating, by the network-side device, the user equipment based on the subscription data and the information about the key or the information about the first certificate.

7. The communication method according to claim 5 or 6, wherein the generating, by the network-side device, a second certificate for the user equipment comprises:
sending, by the network-side device, a certificate application message to the certificate authority CA, wherein the certificate application message is used to request the CA to generate the second certificate for the user equipment; and
receiving, by the network-side device, a certificate reply message sent by the CA, wherein the certificate reply message carries the information about the second certificate.

8. The communication method according to any one of claims 5 to 7, wherein the communication method further comprises:
receiving, by the network-side device, an uplink packet sent by the user equipment, wherein the uplink packet comprises the second certificate and a first packet that is encrypted by using a certificate of the wireless communications network;
authenticating, by the network-side device, the user equipment based on the second certificate; and
decrypting, by the network-side device, the first packet when the network-side device authenticates user equipment successfully based on the second certificate.

9. The communication method according to any one of claims 5 to 8, wherein the certificate response message further carries the certificate of the wireless communications network.

10. The communication method according to any one of claims 5 to 9, wherein the communication method further comprises:
sending, by the network-side device, a downlink packet to the user equipment, wherein the downlink packet comprises a second packet encrypted by using the second certificate.

11. The communication method according to any one of claims 5 to 10, wherein the network-side device comprises a control-plane device in the wireless communications network.

12. The communication method according to any one of claims 5 to 10, wherein the network-side device comprises a forwarding-plane device or a base station in the wireless communications network;
the communication method further comprises:
obtaining, by the forwarding-plane device or the base station, private key information of the wireless communications network from a control-plane device of the wireless communications network; and
the decrypting, by the network-side device, the first packet comprises:
decrypting, by the network-side device, the first packet by using the private key information.

13. A user equipment, comprising:
a sending module, configured to send a certificate request message to a network-side device, wherein the certificate request message carries information about a key shared between the user equipment and a wireless communications network to which the network-side device belongs or carries information about a first certificate generated for the user equipment by a certificate authority CA; and
a receiving module, configured to receive a certificate response message sent by the network-side device, wherein the certificate response message carries information about a second certificate generated for the user equipment by the network-side device, and the second certificate is a certificate generated for the user equipment when the network-side device authenticates the user equipment successfully based on the information about the key or the information about the first certificate.

14. The user equipment according to claim 13, wherein the sending module is further configured to send an uplink packet to the network-side device, wherein the uplink packet comprises the second certificate and a first packet that is encrypted by using a certificate of the wireless communications network, and the second certificate is used by the network-side device to authenticate the user equipment.

15. The user equipment according to claim 14, wherein the receiving module is further configured to receive a downlink packet sent by the network-side device, wherein the downlink packet comprises a second packet that is encrypted by the network-side device by using the second certificate; and
the user equipment further comprises an authentication module and a decryption module, wherein
the authentication module is configured to authenticate the wireless communications network based on the certificate of the wireless communications network; and
the decryption module is configured to decrypt the second packet when the authentication module authenticates the wireless network successfully, based on the certificate of the wireless communications network.

16. The user equipment according to claim 14 or 15, wherein the certificate of the wireless communications network is preconfigured on the user equipment or the certificate of the wireless communications network is obtained by the user equipment from the certificate response message.

17. A network-side device of a wireless communications network, comprising:
a receiving module, configured to receive a certificate request message sent by user equipment, wherein the certificate request message carries information about a key shared between the user equipment and the wireless communications network to which the network-side device belongs or carries information about a first certificate generated for the user equipment by a certificate authority CA;
an authentication module, configured to authenticate the user equipment based on the information about the key or the information about the first certificate;
a generation module, configured to generate a second certificate for the user equipment when the authentication module authenticates the user equipment successfully based on the information about the key or the information about the first certificate; and
a sending module, configured to send a certificate response message to the user equipment, wherein the certificate response message carries information about the second certificate.

18. The network-side device according to claim 17, wherein the authentication module is specifically configured to:
obtain subscription data of the user equipment from a home subscriber server; and
authenticate the user equipment based on the subscription data and the information about the key or the information about the first certificate.

19. The network-side device according to claim 17 or 18, wherein the generation module is specifically configured to:
send a certificate application message to the certificate authority CA, wherein the certificate application message is used to request the CA to generate the second certificate for the user equipment; and
receive a certificate reply message sent by the CA, wherein the certificate reply message carries the information about the second certificate.

20. The network-side device according to any one of claims 17 to 19, wherein the receiving module is further configured to receive an uplink packet sent by the user equipment, wherein the uplink packet comprises the second certificate and a first packet that is encrypted by using a certificate of the wireless communications network; and
the network-side device further comprises the authentication module and a decryption module, wherein
the authentication module is configured to authenticate the user equipment based on the second certificate; and
the decryption module is configured to decrypt the first packet when the authentication module authenticates the user equipment successfully based on the second certificate.

21. The network-side device according to any one of claims 17 to 20, wherein the certificate response message further carries the certificate of the wireless communications network.

22. The network-side device according to any one of claims 17 to 21, wherein the sending module is further configured to send a downlink packet to the user equipment, wherein the downlink packet comprises a second packet encrypted by using the second certificate.

23. The network-side device according to any one of claims 17 to 22, wherein the network-side device is a control-plane device in the wireless communications network.

24. The network-side device according to any one of claims 17 to 22, wherein the network-side device is a forwarding-plane device or a base station in the wireless communications network;
the network-side device further comprises: an obtaining module, configured to obtain private key information of the wireless communications network from a control-plane device of the wireless communications network; and
the decryption module is specifically configured to decrypt the first packet by using the private key information.
